# EUROPÄISCHE PATENTSCHRIFT

(11) **EP 1 152 508 B1**
(45) Veröffentlichungstag und Bekanntmachung des Hinweises auf die Patenterteilung: **27.04.2005**
(21) Anmeldenummer: 01105165.3
(22) Anmeldetag: 02.03.2001
(51) Int. Cl.: H02G 3/04

(54) **Leitungsführungskanal**
Cable duct
Conduite de câbles

(30) Priorität: 20.04.2000 DE 20007272 U
(43) Veröffentlichungstag der Anmeldung: 07.11.2001
(73) Patentinhaber: Tehalit GmbH, 67716 Heltersberg (DE)
(72) Erfinder: Schnurr, Richard, 66957 Vinningen (DE); Ostertag, Christian, 67240 Bischwiller (FR); Malschofsky, Ralph, Dipl.-Ing.(FH), 67716 Heltersberg (DE)
(74) Vertreter: Patentanwälte Möll und Bitterich

(56) Entgegenhaltungen:
- DE-U- 29 912 484
- FR-A- 2 756 431
- US-A- 3 120 574
- US-A- 3 166 633

## Beschreibung

Die Erfindung betrifft Leitungsführungskanäle gemäß dem Oberbegriff des Anspruchs 1, die auch zur Aufnahme von Elektro-Installationsgeräten bestimmt sind.

Leitungsführungskanäle werden weltweit in Millionen Stückzahlen seit vielen Jahrzehnten verwendet. Sie bestehen in aller Regel aus einem Kanalunterteil und einem lösbar aufsetzbaren Deckel. In der überwiegenden Zahl der Fälle besitzt das Kanalunterteil einen U- bzw. C-förmigen Querschnitt, gebildet durch einen Boden und zwei Seitenwände mit je einem Deckelhalteprofil an der offenen Vorderseite.

Leitungsführungskanäle dienen nicht nur zur Aufnahme von elektrischen Leitungen sondern auch zur Aufnahme von Elektro-Installationsgeräten. Die Befestigung dieser Geräte im Kanalunterteil erfolgt entweder an Halteleisten, die an der Kanalrückwand angeformt sind, oder an den Deckelhalteprofilen.

Es versteht sich, dass das Einschnappen der Elektrogeräte in das Deckelhalteprofil oft nicht die erforderliche Festigkeit ergibt. So muss beispielsweise sichergestellt sein, dass eine Steckdose beim Herausziehen des Steckers sich nicht vom Kanalunterteil lösen kann. Aus diesem Grunde werden die Elektrogeräte oftmals zusätzlich verschraubt. Die Befestigungsschrauben werden üblicherweise im Bereich des Deckelhalteprofils eingedreht. Man vergleiche die FR-A 2 756 431 oder die DE-U 299 12 484.

Die Vorteile dieser Schraubverbindungen sind ihre leichte Anbringbarkeit und die gute Festigkeit. Nachteilig ist jedoch, dass die Spitzen der Befestigungsschrauben auf der Kanalinnenseite frei liegen. Da es sich bei den Befestigungsschrauben meist um selbstschneidende Schrauben handelt, bei denen die Gewindespitze scharfkantig ist, können im Kanalinneren liegende Leitungen beschädigt werden. Auch besteht die Gefahr, dass sich der Installateur beim nachträglichen Einziehen von Elektroleitungen an den scharfen Spitzen verletzt Das ist unbefriedigend.

Aus der US 3,166,633 ist ein im Boden zu verlegender Stahlblechkanal bekannt, der mit einem höhenverstellbaren Deckel ausgerüstet ist. Zur Höhenverstellung dienen Gewindeschrauben in Verbindung mit Gewindebuchsen, die in den Seitenwänden des Kanalunterteils montiert sind. Um zu verhindern, dass die Gewindebuchsen und die Gewindeschrauben durch den Bodenestrich blockiert werden, ist an der Außenseite der Kanalseitenwände eine Z-förmige Schutzleiste angeschweißt. Dadurch entsteht unterhalb der Gewindebuchsen ein Hohlraum, in den die Gewindeschrauben eintauchen können. Die Montage von Elektro-Installationsgeräten ist bei diesem bekannten Kanal weder vorgesehen noch möglich.

Der vorliegenden Erfindung liegt daher die Aufgabe zugrunde, einen Leitungsführungskanal anzugeben, bei dem die Verletzungsgefahr durch Befestigungsschrauben beseitigt ist.

Diese Aufgabe wird durch einen Leitungsführungskanal mit den Merkmalen des Anspruchs 1 gelöst.

Dank der vorliegenden Erfindung kann die bewährte Schraubbefestigung im Bereich der Deckelhalteprofile beibehalten werden, die Gefahr von Verletzungen oder Beschädigungen ist jedoch völlig beseitigt. Beim Extrudieren des Kanalunterteils lassen sich die die Schraubspitzen aufnehmenden Kammern praktisch ohne Mehraufwand herstellen.

Ein noch besserer Halt der Befestigungsschrauben lässt sich erreichen, wenn im Deckelverschlussprofil oberhalb der erfindungsgemäßen Kammer zusätzlich eine U-förmige, vertiefte Rinne ausgebildet wird. Das lichte Maß dieser Rinne ist auf den Durchmesser des Gewindes der Befestigungsschrauben so abgestimmt, dass sich deren Windungen beidseits in die Wände der Rinne eingraben.

Vorteilhafterweise sind die Seitenwände des Kanalunterteils durch zusätzliche Kammern versteift. Dank dieser Versteifung können die Wandstärken selbst reduziert werden, was eine Material- und Gewichtserspamis zur Folge hat.

Anhand der Zeichnung soll die Erfindung in Form eines Ausführungsbeispiels näher erläutert werden. Es zeigen
- Fig. 1: einen Querschnitt durch einen Leitungsführungskanal, gebildet durch ein Kanalunterteil und einen aufgerasteten Deckel, und
- Fig. 2: einen vergrößerten Ausschnitt eines Kanalunterteils im Bereich des Deckelhalteprofils mit aufgeschraubtem Elektro-Installationsgerät.

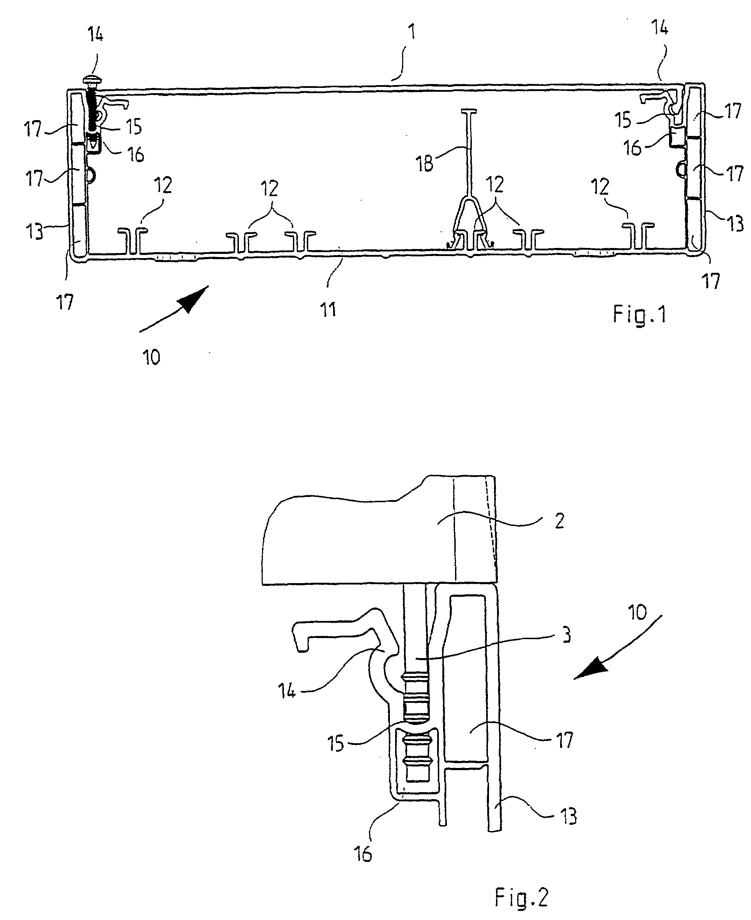

Fig. 1 zeigt einen Leitungsführungskanal, bestehend aus einem Kanalunterteil 10 mit U-förmigem Querschnitt und einem Deckel 1. Das Kanalunterteil 10 wird gebildet durch einen Boden 11 und zwei Seitenwände 13, an deren freier Kante je ein Deckelhalteprofil 14 angeformt ist. Der Deckel 1 ist in die Deckelhalteprofile 14 eingerastet.

An der Innenseite des Kanalbodens 11 erkennt man Befestigungsleisten 12, die zur Befestigung von Einbauteilen dienen, beispielsweise einer Trennwand 18.

An der Innenseite der Seitenwände 13 sind Hohlkammem 17 angeformt. Diese dienen dazu, die Seitenwände 13 zu versteifen, so dass die Stärke der Kammerwände deutlich reduziert werden kann, ohne dass die Festigkeit darunter leidet.

Fig. 2 zeigt einen Ausschnitt aus dem Kanalunterteil 10 im Bereich des Deckelhalteprofils 14 in vergrößerter Darstellung. Auf das Kanalunterteil 10 ist anstelle des Deckels 1 ein Elektro-Installationsgerät 2 aufgeschraubt. Dabei kann es sich um einen Elektro-Kleinverteiler, eine Steckdose oder ähnliches handeln. Die Befestigung erfolgt mit Hilfe einer Befestigungsschraube 3, die durch das Deckelhalteprofil 14 hindurchgeschraubt ist. Unterhalb des Deckelhalteprofils 14 ist eine zusätzliche Kammer 16 ausgebildet, die die scharfe Spitze der Schraube 3 aufnimmt. Dadurch ist die Schraubenspitze gegen das Kanalinnere völlig isoliert. Beschädigungen der Elektroleitungen oder Verletzungen des Installateurs sind ausgeschlossen.

Wie Fig. 2 insbesondere erkennen lässt, ist im Bereich des Deckelhalteprofils 14 oberhalb der zusätzlichen Kammer 16 eine U-förmige Rinne 15 eingeformt, deren lichtes Maß auf die Befestigungsschraube 3 derart abgestimmt ist, dass deren Gewinde sich in die Seitenwände der Rinne 15 eingräbt. Dadurch wird der Halt der Schraube 3 im Kanalunterteil 10 zusätzlich verbessert.

## Patentansprüche

1. Leitungsführungskanal, im wesentlichen umfassend
- ein Kanalunterteil (10) mit
- einem Boden (11),
- Seitenwänden (13)
- und Deckelhalteprofilen (14) zur Aufnahme von Elektro-Installationsgeräten (2) an den Innenseiten der Seitenwände (13),
- und einen lösbar auf die Deckelhalteprofile (14) aufrastbaren Deckel (1),
- der Querschnitt des Kanalunterteils (10) ist U- bzw. C-förmig,
**gekennzeichnet durch** das Merkmal:
- unterhalb des Deckelhalteprofils (14) befindet sich eine geschlossene Kammer (16).

2. Leitungsführungskanal nach Anspruch 1, **gekennzeichnet durch** das Merkmal:
- das Deckelhalteprofil (14) besitzt eine U-förmige, vertiefte Rinne (15).

3. Leitungsführungskanal nach Anspruch 1 oder 2, **gekennzeichnet durch** das Merkmal:
- die Seitenwände (13) sind **durch** zusätzliche Kammern (17) versteift.

## Claims

1. Wiring trunking, essentially comprising
- a trunking lower part (10) with
- a bottom (11),
- side walls (13)
- and cover retaining profiles (14, 15) for holding electrical installation appliances (2) at the inner sides of the side walls (13),
- and a cover (1) which can be locked in a releasable manner onto the cover retaining profiles (14),
- the cross section of the trunking lower part (10) is U- or C-shaped,
**characterised by** the feature:
- a closed chamber (16) is located below the cover retaining profile (14).

2. Wiring trunking according to Claim 1, **characterised by** the feature :
― the cover retaining profile (14) has a U-shaped, sunk trough (15).

3. Wiring trunking according to Claim 1 or 2, **characterised by** the feature:
- the side walls (13) are reinforced by additional chambers (17).

## Revendications

1. Conduite de câbles comprenant essentiellement
- une partie inférieure de conduite (10) avec
- un fond (11),
- des parois latérales (13)
- et des profilés de fixation de couvercle (14) pour le montage d'appareils d'installation électrique (2) sur les faces intérieures des parois latérales (13),
- et un couvercle (1) encliquetable de manière amovible sur les profilés de fixation de couvercle (14),
- la section de la partie inférieure de conduite (10) est en forme de U ou de C, **caractérisée par le fait**
- **qu'**une chambre fermée (16) se trouve sous le profilé de fixation de couvercle (14).

2. Conduite de câbles selon la revendication 1, **caractérisée par le fait**
- **que** le profilé de fixation de couvercle (14) possède une goulotte creusée (15) en forme de U.

3. Conduite de câbles selon la revendication 1 ou 2, **caractérisée par le fait**
- **que** les parois latérales (13) sont rigidifiées par des chambres supplémentaires (17).
